# EUROPEAN PATENT APPLICATION

(11) **EP 4 645 876 A1**
(43) Date of publication of application: **05.11.2025**
(21) Application number: 24750514.2
(22) Date of filing: 29.01.2024
(51) Int. Cl.: H04N 21/436, H04N 21/4363, H04N 21/462, H04N 21/81

(54) **IMAGE DATA TRANSMISSION METHOD AND ELECTRONIC DEVICE FOR SUPPORTING SAME**

(30) Priority: 30.01.2023 KR 20230011950; 14.04.2023 KR 20230049477
(71) Applicant: Samsung Electronics Co., Ltd., Suwon-si, Gyeonggi-do 16677 (KR)
(72) Inventor: HONG, Bohyun, Suwon-si Gyeonggi-do 16677 (KR)
(74) Representative: Gulde & Partner
(86) International application number: PCT/KR2024/001342
(87) International publication number: WO 2024/162715

(57) **Abstract**

An electronic device according to various embodiments is disclosed. The electronic device may be configured to enable a function for automatically transmitting at least one piece of image data that is acquired during execution of an application, detect at least one external electronic device, based on the enabling of the function, record identification information of the detected at least one external electronic device, execute the application, based on the execution of the application, determine, as a target to which the at least one piece of image data is to be automatically transmitted, an external electronic device that satisfies a designated condition among the at least one external electronic device the identification information of which is recorded, establish a communication connection of a designated communication protocol with the external electronic device that is determined as the target, and automatically transmit, the at least one piece of image data acquired while the application is running, to the external electronic device that is determined as the target, while maintaining the communication connection.

## Description

### [Technical Field]

Embodiments of the disclosure relate to an image data transmission method and an electronic device supporting the same.

### [Background Art1

In response to the advancement of digital convergence in which various information and communication technologies are fused, electronic devices are supporting various services that are integrated into the central functions of the electronic devices. For example, an electronic device may provide an image sharing service for sharing (or transmitting) image data to an external platform when acquiring the image data through a camera, based on a communication function that enables transmission and reception of various information resources.

The above information is presented as background information only to assist with an understanding of the disclosure. No determination has been made, and no assertion is made, as to whether any of the above might be applicable as prior art with regard to the disclosure.

### [DISCLOSURE]

### [Solution to Problem]

According to an embodiment of the disclosure, an electronic device may include: communication module; at least one camera module; at least one processor; and memory configured to store instructions.

According to an embodiment of the disclosure, when executed by the at least one processor, the instructions may cause the electronic device to: enable a function for automatically transmitting at least one piece of image data that is acquired by using the at least one camera module while an application stored in the memory is running; detect at least one external electronic device, based on the enabling of the function; record identification information of the detected at least one external electronic device in the memory; execute the application; based on the execution of the application, determine, as a target to which the at least one piece of image data is to be automatically transmitted, an external electronic device that satisfies a designated condition among the at least one external electronic device the identification information of which is recorded; establish a communication connection of a designated communication protocol with the external electronic device that is determined as the target, by using the communication module; and automatically transmit, the at least one piece of image data acquired by using the at least one camera module while the application is running, to the external electronic device that is determined as the target by using the communication module, while maintaining the communication connection.

According to an embodiment of the disclosure, an image data transmission method of an electronic device may include: enabling a function for automatically transmitting at least one piece of image data that is acquired by using at least one camera module while an application stored in memory is running; detecting at least one external electronic device, based on the enabling of the function; recording identification information of the detected at least one external electronic device in the memory; executing the application; based on the execution of the application, determining, as a target to which the at least one piece of image data is to be automatically transmitted, an external electronic device that satisfies a designated condition among the at least one external electronic device the identification information of which is recorded; establishing a communication connection of a designated communication protocol with the external electronic device that is determined as the target, by using a communication module; and automatically transmitting, the at least one piece of image data acquired by using the at least one camera module while the application is running, to the external electronic device that is determined as the target by using the communication module, while maintaining the communication connection.

According to an embodiment of the disclosure, there is provided a computer-readable non-transitory storage medium that has a computer program recorded thereon to execute an image data transmission method of an electronic device, the image data transmission method including: enabling a function for automatically transmitting at least one piece of image data that is acquired by using at least one camera module while an application stored in memory is running; detecting at least one external electronic device, based on the enabling of the function; recording identification information of the detected at least one external electronic device in the memory; executing the application; based on the execution of the application, determining, as a target to which the at least one piece of image data is to be automatically transmitted, an external electronic device that satisfies a designated condition among the at least one external electronic device the identification information of which is recorded; establishing a communication connection of a designated communication protocol with the external electronic device that is determined as the target, by using a communication module; and automatically transmitting, the at least one piece of image data acquired by using the at least one camera module while the application is running, to the external electronic device that is determined as the target by using the communication module, while maintaining the communication connection.

### [BRIEF ESCRIPTION OF DRAWINGS]

FIG. 1 is a view illustrating an electronic device in a network environment according to an embodiment.
FIG. 2 is a view illustrating an operating environment of the electronic device according to an embodiment.
FIG. 3 is a view illustrating components of the electronic device according to an embodiment.
FIG. 4 is a view illustrating a flow of operations of establishing a communication connection with an external electronic device, based on activation of an automatic sharing function of an electronic device according to an embodiment.
FIG. 5 is a view illustrating a first user interface of an application which is executed by the electronic device according to an embodiment.
FIG. 6 is a view illustrating a second user interface of the application which is executed by the electronic device according to an embodiment.
FIG. 7 is a view illustrating a flow of operations of acquiring image data by an electronic device and transmitting the image data to an external electronic device according to an embodiment.
FIG. 8 is a view illustrating an example of a third user interface of an application which is executed by the electronic device according to an embodiment.
FIG. 9 is a view illustrating another example of the third user interface of the application which is executed by the electronic device according to an embodiment.
FIG. 10 is a view illustrating a first user interface of the electronic device according to an embodiment.
FIG. 11 is a view illustrating a second user interface of the electronic device according to an embodiment.
FIG. 12 is a view illustrating a user interface of an external electronic device that receives image data from an electronic device according to an embodiment.

Throughout the drawings, the same or similar reference numerals will be used to refer to the same or similar components.

### [MODE FOR THE INVENTION]

An electronic device may share (or transmit) image data to an external platform, based on a user input that instructs sharing of the image data. For example, the electronic device may share selected image data with a selected external electronic device by receiving a user input that selects image data to be shared and an external electronic device with which the image data is to be shared, and processing the user input to connect communication with the external electronic device and to transmit the image data.

Alternatively, the electronic device may share (or transmit) image data to an external platform based on a routine pre-defined in the electronic device. For example, the electronic device may share stored image data to an external electronic device which can access a server, by storing the image data in a virtualized server (for example, a cloud) by using an internet-based network when acquiring the image data.

However, the above-described process of sharing image data may cause inconvenience to the user or may be restrictive to the operating environment of the electronic device. For example, a user input may be required to specify (or select) image data and an external platform every time the image data is shared with the external platform, which may degrade the processing speed of the electronic device and user experience related to sharing of image data. Furthermore, for example, the sharing of the image data may be impossible in operating environments with limited or poor access to internet-based networks.

Embodiments of the disclosure may provide an image data transmission method which automatically shares (or transmits) acquired image data to an external platform without a separate user input or access to a network when executing an application supporting acquisition of image data, and an electronic device supporting the same.

Hereinafter, various embodiments of the disclosure will be described with reference to the accompanying drawings. It should be appreciated that various embodiments are not intended to limit the disclosure to particular embodiments and include various modifications, equivalents, and/or alternatives of embodiments of the disclosure.

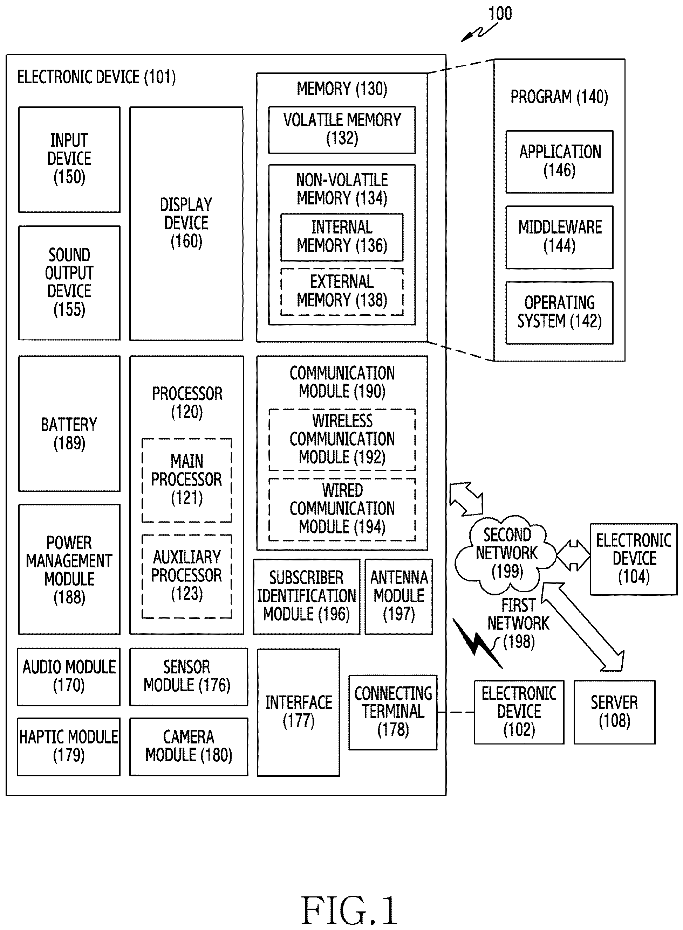

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

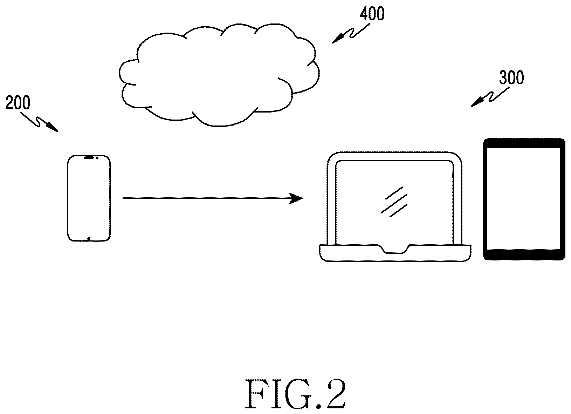

FIG. 2 is a view illustrating an operating environment of an electronic device according to an embodiment.

Referring to FIG. 2, the electronic device 200 (for example, the electronic device 101 of FIG. 1) according to an embodiment may share image data with at least one external electronic device 300 (for example, the electronic device 102 of FIG. 1). For example, the electronic device 200 may transmit image data that is acquired while executing an application supporting an image shoot to at least one external electronic device 300. In an embodiment, the electronic device 200 may dynamically determine at least one external electronic device 300 to which to transmit the image data. For example, the electronic device 200 may detect at least one external electronic device in a surrounding area based on execution of the application, and may determine the external electronic device 300 that satisfies a designated condition among the detected at least one external electronic device as a target to transmit the image data. In an embodiment, the electronic device 200 may transmit a plurality of image data acquired to the at least one external electronic device 300, while maintaining a communication connection (or communication channel) with the at least one external electronic device 300, determined as the target, according to a designated communication protocol (for example, Wi-Fi direct) while the application is running. For example, when acquiring first image data, the electronic device 200 may transmit the first image data based on communication connected with the at least one external electronic device 300, and then, when acquiring second image data, the electronic device 200 may transmit the second image data based on communication that maintains the connection with the at least one external electronic device 300. In various embodiments, the first image data and the second image data may constitute different images. For example, the first image data may constitute at least a part of a first image, and the second image data may constitute at least a part of a second image which is different from the first image.

According to an embodiment, in the image data sharing process of the electronic device 200 described above, the electronic device 200 may perform a series of operations without receiving a user input that selects image data to be shared and an external electronic device with which the image data is to be shared. For example, based on execution of the application, the electronic device 200 may automatically perform at least some operations of determining at least one external electronic device 300 with which image data is to be shared, connecting communication with the at least one external electronic device 300 determined, and continuously transmitting at least one piece of image data based on the connected communication. According to an embodiment, in the image data sharing process of the electronic device 200 described above, the electronic device 200 may perform the series of operations without interworking with a server 400 (for example, a cloud) that is accessible through an internet-based network. For example, based on execution of the application, the electronic device 200 may establish a communication connection (or communication channel) of a designated communication protocol (for example, Wi-Fi direct) with at least one external electronic device 300, and may transmit at least one piece of image data based on the connected communication.

In various embodiments, the at least one external electronic device 300 may include at least one of a desktop, a laptop, and a tablet which support at least one of a relatively large screen, a high resolution, and various editing functions on image data compared to the electronic device 200. However, the at least one external electronic device 300 is not limited to devices of the above-described form factor as long as the external electronic device 300 supports the communication connection of the designated communication protocol (for example, Wi-Fi direct) with the electronic device 200. In addition, in various embodiments, the at least one external electronic device 300 may refer to a device that exists in a surrounding area of the electronic device 200 (or an area in a range within a designated distance from the electronic device 200), and may be referred as a peripheral device in this prospect.

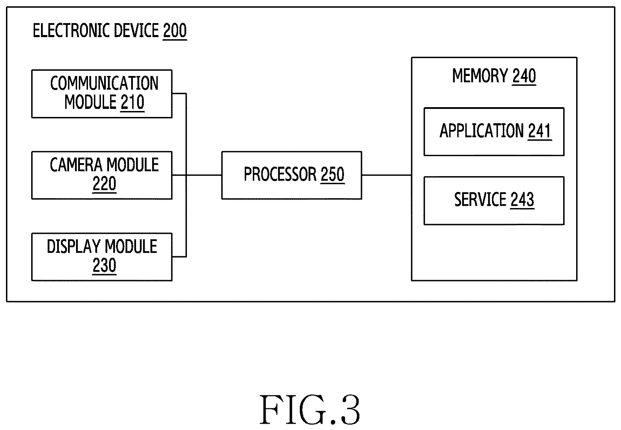

FIG. 3 is a view illustrating components of the electronic device according to an embodiment.

Referring to FIG. 3, the electronic device 200 (for example, the electronic device 101 of FIG. 1) according to an embodiment may include a communication module 210 (or the communication module 190 of FIG. 1), at least one camera module 220 (for example, the camera module 180 of FIG. 1), a display module 230 (for example, the display module 160 of FIG. 1), memory 240 (for example, the memory 130 of FIG. 1), and at least one processor 250 (for example, the processor 120 of FIG. 1). In various embodiments, the electronic device 200 may omit at least some of the above-described components, or may further include other additional components. For example, the electronic device 200 may further include at least some of the components of the electronic device (for example, the electronic device 101 of FIG. 1) mentioned above through FIG. 1.

In an embodiment, the communication module 210 (for example, a communication device including a communication circuit) may support wireless communication between the electronic device 200 and at least one external electronic device (for example, the at least one external electronic device 300 of FIG. 2). For example, the communication module 210 may establish communication (or communication channel) with the at least one external electronic device 300 according to a prescribed communication protocol, and may transmit and receive signals and/or data (or packets including data) to and from the at least one external electronic device 300 through the communication. In an embodiment, the communication module 210 may include an interface which supports short-range wireless communication (for example, Wi-Fi, Wi-Fi direct, and/or Bluetooth).

In an embodiment, the at least one camera module 220 (for example, a camera device including an image sensing circuit) may shoot (or acquire) an image related to an external environment of the electronic device 200. For example, the at least one camera module 220 may be triggered and operated in response to execution of a designated application 241, and may shoot (for example, capture) an image based on a user input (for example, a touch input, a gesture input, and/or a voice input) or the elapse of a time set in a timer. In an embodiment, the at least one camera module 220 may include at least one camera disposed in at least one of a front surface and a rear surface of the electronic device 200. The at least one camera may have the same specification, or may have different specifications regarding at least one of an angle of view, pixel, aperture, whether an optical zoom function is supported, whether a digital zoom function is supported, whether an optical image stabilization function is supported, a type of a lens assembly, and arrangement of the lens assembly.

In an embodiment, the display module 230 (for example, a display device including a display driving circuit) may have at least a part exposed to the outside of the electronic device 200 to visually provide various contents. For example, the display module 230 may display various user interfaces which are provided by the electronic device 200 or the application 241. In an embodiment, the display module 230 may include a touch screen display, and may function as an interface to receive (or detect) a user input (for example, a touch input) based on the touch screen display.

In an embodiment, the memory 240 may store at least one piece of data related to operations of the electronic device 200, or may store at least one instruction related to function operations of the components of the electronic device 200. For example, the memory 240 may at least temporarily store image data which is acquired (or generated) by the at least one camera module 220. For example, the memory 240 may at least temporarily store data which is acquired (or received) from the at least one external electronic device 300 through the communication module 210. In an embodiment, the memory 240 may store the application 241 (for example, the application 146 of FIG. 1) and a service 243.

In an embodiment, the application 241 (for example, an Expert RAW application and/or a camera application) may support an image shoot (or acquisition of image data) through the at least one camera module 220, and the image may include at least one of a still image and a video. In various embodiments, the application 241 may include at least one of an application which is mounted in a preloaded form when the electronic device 200 is manufactured, and an application which is downloaded in a third party form from an online market.

In an embodiment, the service 243 (for example, a Quick Share service) may support sharing (or transmission) of image data through execution of the application 241. For example, when the application 241 is executed, the service 243 may detect at least one external electronic device 300 existing in a surrounding area of the electronic device 200 (or an area of a range within a designated distance from the electronic device 200) based on a request from the application 241, and may provide information on the at least one external electronic device 300 detected to the application 241 or the at least one processor 250. In addition, for example, when the application 241 is executed, the service 243 may transmit a signal for requesting a communication connection with the electronic device 200 to at least some of the at least one external electronic device 300 detected based on the request from the application 241, and may provide information on a state of the communication connection to the application 241 or the at least one processor 250. In addition, for example, when image data based on execution of the application 241 is acquired, the service 243 may transmit the image data to the at least one external electronic device 300 which is communicatively connected with the electronic device 200 based on the request from the application 241, and may provide information on a transmission state of the image data to the application 241 or the at least one processor 250. In various embodiments, the service 243 may be configured as at least a part of the application 241, or may be configured as an independent software program from the application 241. In various embodiments, the service 243 may be triggered and enabled when the application 241 is executed according to a routine defined on a framework, or may be enabled based on a user input related to setting of the electronic device 200.

In an embodiment, the at least one processor 250 (for example, a processor device including a processing circuit) may control various functions or operations of the electronic device 200 by executing a code (for example, an instruction) of a programming language stored in the memory 240. For example, the at least one processor 250 may be electrically connected with the components of the electronic device 200 to deliver (or transmit) at least one command, signal, and/or piece of data that is involved in performing functions or operations of the electronic device 200 to relevant components.

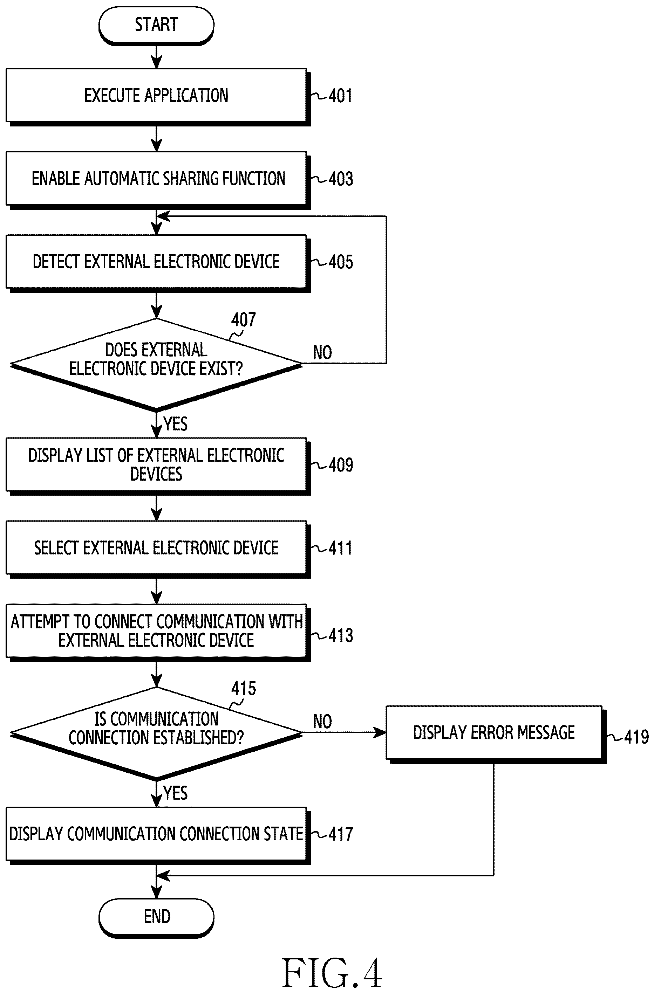

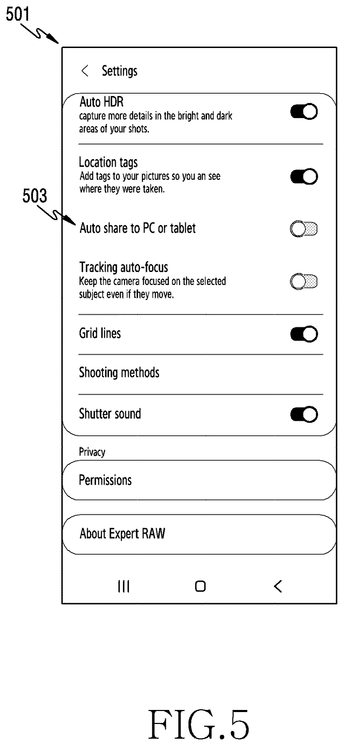

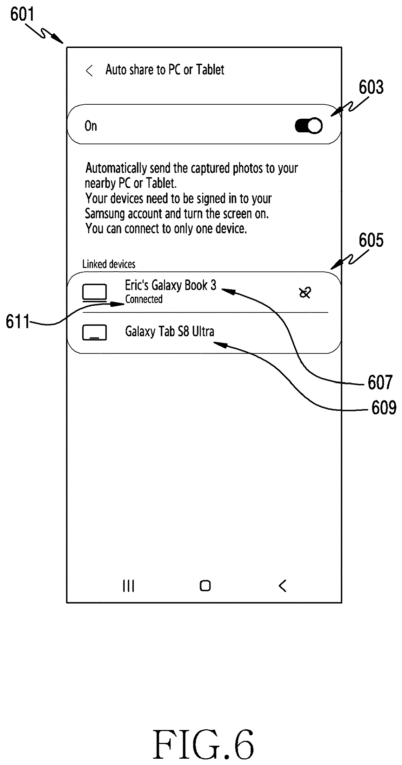

FIG. 4 is a view illustrating a flow of operations of establishing a communication connection with an external electronic device based on enabling of an automatic sharing function in an electronic device according to an embodiment. FIG. 5 is a view illustrating a first user interface of an application which is executed by the electronic device according to an embodiment. FIG. 6 is a view illustrating a second user interface of the application which is executed by the electronic device according to an embodiment.

In explaining the embodiment of FIG. 4 hereinafter, references will be made to the embodiments of FIGS. 5 and 6. In addition, respective operations mentioned in the embodiment of FIG. 4 may be performed in sequence, or may not necessarily be performed in sequence. For example, the order of the respective operations mentioned in the embodiment of FIG. 4 may be changed, or at least two operations may be performed in parallel.

Referring to FIG. 4, in operation 401, an electronic device (for example, the electronic device 200 of FIG. 2 or 3) according to an embodiment may execute an application (for example, the application 241 of FIG. 3). For example, the electronic device 200 may execute the application 241 which supports acquisition of image data (or image shoot), based on reception of a user input (for example, a touch input to an icon associated with execution of the application 241, a voice input of uttering the name of the application 241, and/or a pre-defined gesture input related to execution of the application 241).

In operation 403, the electronic device 200 according to an embodiment may enable an automatic sharing function for automatically transmitting image data acquired based on execution of the application 241 to at least one external electronic device. Referring to FIGS. 5 and 6 for example, the electronic device 200 may display a first user interface 501 of the application 241 based on a user input to the application 241. In an embodiment, the first user interface 501 may support user setting on at least one of the function of the application 241 and the function of at least one camera module (for example, the at least one camera module 220 of FIG. 3) associated with execution of the application 241. In an embodiment, the electronic device 200 may display a second user interface 601 of the application 241 that is switched (or entered) from the first user interface 501, based on reception of a user input that selects a menu 503 (for example, Auto share to PC or tablet) related to the automatic sharing function on the first user interface 501. In an embodiment, the second user interface 601 may include a button 603 (for example, a toggle button) to control enabling or disabling of the automatic sharing function, and the electronic device 200 may enable the automatic sharing function based on a user input to the button 603.

In operation 405, the electronic device 200 according to an embodiment may detect (or search for) an external electronic device. For example, in response to enabling of the automatic sharing function, the electronic device 200 may control the application 241 to deliver (or transmit), from the application 241 to a service (for example, the service 243 of FIG. 3), a signal for requesting the service 243 to detect at least one external electronic device existing in a surrounding area (or an area of a range within a designated distance from the electronic device 200) of the electronic device 200. In an embodiment, the electronic device 200 may control the application 241 to deliver (or transmit), from the application 241 to the service 243, a signal for requesting the service 243 to detect only at least one external electronic device that has the same account (or token) as the electronic device 200 in the surrounding area of the electronic device 200.

In an embodiment, the service 243 may request a communication module (for example, the communication module 210 of FIG. 3) to transmit a detection signal in a digital or analogue form, based on the signal requesting the detection. In addition, the service 243 may identify at least one external electronic device existing in the surrounding area of the electronic device 200, based on a response signal of the at least one external electronic device that is received by the communication module 210 in response to the detection signal. In an embodiment, when the existence of the at least one external electronic device is identified based on the response signal, the service 243 may acquire (or receive) identification information (for example, model information, account information and/or wireless communication ID) by requesting from the corresponding external electronic device, may provide the acquired identification information of each of the at least one external electronic device to the at least one processor 250. In an embodiment, the electronic device 200 may at least temporarily record (or store) the identification information of the at least one external electronic device acquired by the at least one processor 250 in memory (for example, the memory 240 of FIG. 3).

In operation 407, the electronic device 200 according to an embodiment may determine (or identify) whether at least one external electronic device exists in the surrounding area of the electronic device 200. For example, the electronic device 200 may search for at least one external electronic device in the surrounding area of the electronic device 200 through the communication module 210 for a designated time and/or a predetermined number of times, and, based on this, may determine (or identify) whether the at least one external electronic device exists in the surrounding area of the electronic device 200.

In operation 409, the electronic device 200 according to an embodiment may display a list indicating the at least one external electronic device, based on identifying that the at least one external electronic device exists in the surrounding area of the electronic device 200. Referring to FIG. 6 for example, the electronic device 200 may display a list 605 including identification information 607 and/or 609 of the at least one external electronic device that is identified as existing on the second user interface 601 of the application 241. In various embodiments, the electronic device 200 may display the list 605 further including identification information of at least one external electronic device that has a history of having been detected and/or communicatively connected based on execution of the application 241, along with the identification information 607 and/or 609 of the at least one external electronic device identified as existing.

In operation 411, the electronic device 200 according to an embodiment may receive a user input that selects at least one of the at least one external electronic device detected in the surrounding area of the electronic device 200. Referring to FIG. 6 for example, the electronic device 200 may receive a user input that selects specific identification information (for example, 607) on the list 605 displayed on the second user interface 601 of the application 241, and may determine an external electronic device corresponding to the selected identification information (for example, 607) as a target to establish a communication connection (or communication channel) with the electronic device 200.

In operation 413, the electronic device 200 according to an embodiment may attempt (or request) to connect communication with the selected external electronic device through the communication module 210. For example, the electronic device 200 may control the application 241 to deliver (or transmit), from the application 241 to the service 243, a signal that requests the service 243 to connect communication of a designated protocol (for example, Wi-Fi direct) to the external electronic device determined as the target for the communication connection using the communication module 210.

In operation 415, the electronic device 200 according to an embodiment may determine whether the communication connection (or communication channel) is established between the external electronic device determined as the target for the communication connection, and the electronic device 200. For example, the electronic device 200 may determine whether the communication connection is established between the electronic device 200 and the external electronic device, based on a response signal from the external electronic device to the request signal of the communication connection transmitted by the service 243.

According to an embodiment, based on determining that the communication connection (or communication channel) with the external electronic device according to the designated protocol (for example, Wi-Fi direct) is established, the electronic device 200 according to an embodiment may control a display module (for example, the display module 230 of FIG. 3) to display a communication connection state between the electronic device 200 and the external electronic device in operation 417. Referring to FIG. 6 for example, the electronic device 200 may display a content 611 (for example, a text (Connected), an image and/or a symbol) indicating the establishment of the communication connection (or communication channel) in a surrounding area of the identification information (for example, 607) corresponding to the external electronic device communicatively connected with the electronic device 200, displayed on the second user interface 601 of the application 241. For example, the electronic device 200 may apply a display effect (for example, display of a designated color, display of bold, and/or display of blinking) indicating the establishment of the communication connection (or communication channel) to the identification information (for example, 607) corresponding to the external electronic device communicatively connected with the electronic device 200.

According to an embodiment, based on determining that the communication connection (or communication channel) with the external electronic device according to the designated protocol (for example, Wi-Fi direct) is not established, the electronic device 200 according to an embodiment may control the display module (for example, the display module 230 of FIG. 3) to display an error message in operation 419. In this regard, the communication connection may not be established between the electronic device 200 and the external electronic device when the external electronic device that the electronic device attempts ( or requests) to connect communication with has a low-power state (for example, screen off), the service (for example, the Quick Share service) that the external electronic device includes has a disabled state (or a reception rejection state on data shared by the outside), the external electronic device has an one-to-one communication connection state with another external electronic device according to the designated protocol, or the external electronic device leaves the area of the range within the designated distance from the electronic device 200. In an embodiment, the electronic device 200 may display the error message indicating that the communication connection with the external electronic device is not established through the second user interface (for example, the second user interface 601 of FIG. 6) of the application 241, or a separate pop-up window. In various embodiments, the electronic device 200 may include information for guiding to change the state of the external electronic device in the error message, and may display the error message.

In various embodiments, the electronic device 200 may re-attempt to connect communication with the external electronic device according to the designated protocol (for example, Wi-Fi direct) before or after displaying the error message. For example, the electronic device 200 may control the application to deliver (or transmit), from the application 241 to the service 243, a signal that requests the service 243 to re-attempt to connect communication with the external electronic device within a designated time or a designated number of times.

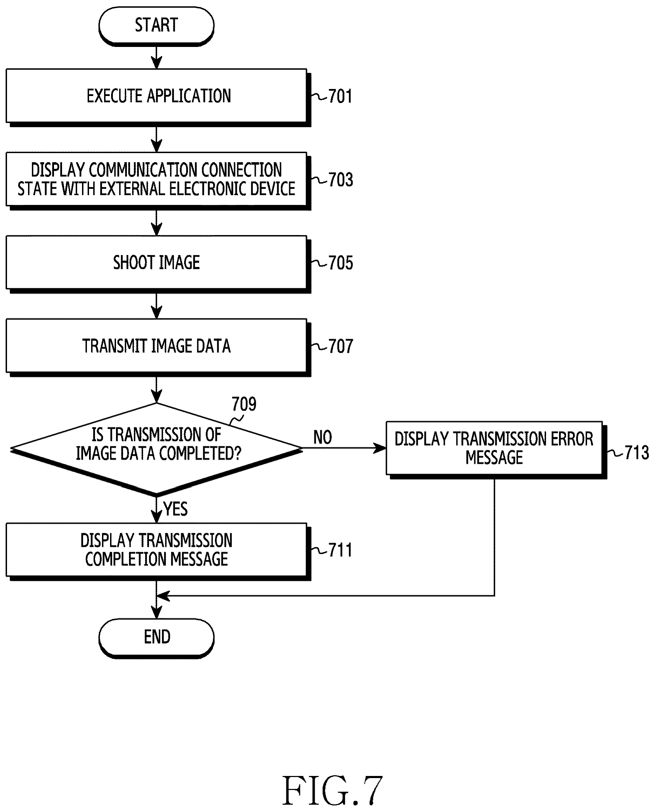

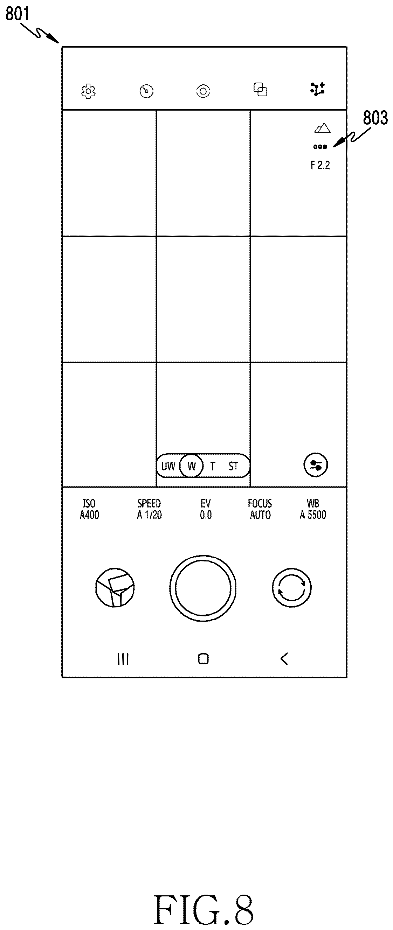

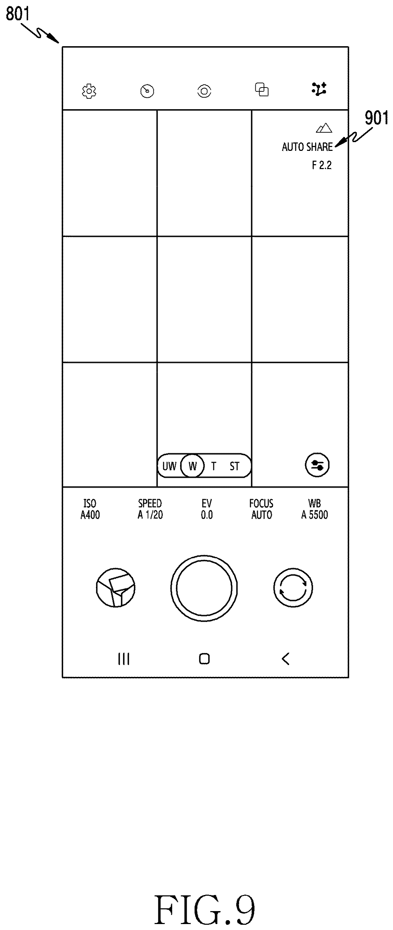

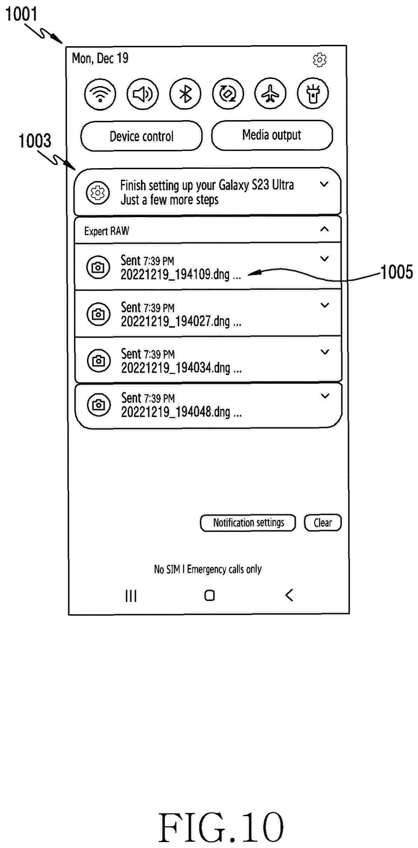

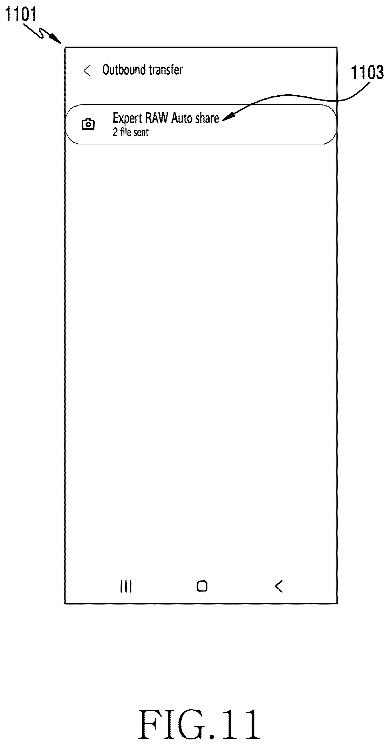

FIG. 7 is a view illustrating a flow of operations of acquiring image data by an electronic device and transmitting to an external electronic device according to an embodiment. FIG. 8 is a view illustrating an example of a third user interface of an application which is executed by the electronic device according to an embodiment. FIG. 9 is a view illustrating another example of the third user interface of the application which is executed by the electronic device according to an embodiment. FIG. 10 is a view illustrating a first user interface of the electronic device according to an embodiment. FIG. 11 is a view illustrating a second user interface of the electronic device according to an embodiment.

In explaining the embodiment of FIG. 7 hereinafter, reference will be made to the embodiments of FIGS. 8, 9, 10, and 11. Respective operations mentioned in the embodiment of FIG. 7 may be performed in sequence, or may not necessarily be performed in sequence. For example, the order of the respective operations mentioned in the embodiment of FIG. 7 may be changed, or at least two operations may be performed in parallel. In addition, the operations mentioned in the embodiment of FIG. 7 may be understood as being performed after the operations mentioned in the embodiment of FIG. 4 described above are performed. For example, the embodiment of FIG. 7 may be an embodiment where the application 241 is re-executed in a state in which the automatic sharing function is enabled to automatically transmit image data acquired based on execution of the application (for example, the application 241 of FIG. 3) to at least one external electronic device.

Referring to FIG. 7, in operation 701, the electronic device (for example, the electronic device 200 of FIG. 2 or 3) according to an embodiment may execute an application (for example, the application 241 of FIG. 3). For example, the electronic device 200 may execute the application 241 which supports acquisition of image data (or image shoot), based on reception of a user input (for example, a touch input to an icon associated with execution of the application 241, a voice input of uttering the name of the application 241, and/or a pre-defined gesture input related to execution of the application 241).

In operation 703, the electronic device 200 according to an embodiment may display a communication connection state between the electronic device 200 and an external electronic device, based on execution of the application 241.

Regarding the display of the communication connection state, the electronic device 200 in an embodiment may determine an external electronic device to establish a communication connection of a designated communication protocol (for example, Wi-Fi direct) with the electronic device 200. For example, based on execution of the application 241, the electronic device 200 may control a service (for example, the service 243 of FIG. 3) to detect at least one external electronic device existing in a surrounding area of the electronic device 200 (or an area of a range within a designated distance from the electronic device 200), and may acquire identification information from the detected at least one external electronic device, and may compare the identification information with identification information (for example, identification information recorded according to performance of operation 405) recorded (or stored) in memory (for example, the memory 240 of FIG. 3). The electronic device 200 may identify at least one external electronic device that has identification information corresponding to the identification information recorded in the memory 240 among the detected at least one external electronic device, and may determine an external electronic device that satisfies a designated condition among the at least one external electronic device identified as an external electronic device to establish the communication connection (or communication channel) of the designated communication protocol (for example, Wi-Fi direct) with the electronic device 200. For example, the electronic device 200 may determine, as the external electronic device satisfying the designated condition, a first external electronic device (for example, the external electronic device communicatively connected with the electronic device 200 according to performance of operations 411 to 417) that has a history of having established the communication connection (or communication channel) of the designated communication protocol (for example, Wi-Fi direct) most recently among the at least one external electronic device identified. For example, based on determining that the first external electronic device is in a state where establishment of the communication connection with the electronic device 200 is impossible (for example, a low-power state, a disabled state of the service, a reception rejection state on sharing data, a one-to-one communication connection state with another external electronic device, or a state in which the first external electronic device leaves a designated range area from the electronic device 200), the electronic device 200 may determine, as the external electronic device satisfying the designated condition, a second external electronic device that has the same account (or token) as the electronic device 200 among the at least one external electronic device identified. In addition, for example, based on identifying a plurality of second external electronic devices, the electronic device 200 may determine a third external electronic device that exists at the closest distance to the electronic device 200 among the plurality of second external electronic devices as the external electronic device satisfying the designated condition. In various embodiments, a distance between the electronic device 200 and the plurality of second external electronic devices may be determined based on a difference between a time at which the detection signal transmitted to detect at least one external electronic device is transmitted, and a time at which a response signal to the detection signal is received. In addition, for example, the electronic device 200 may acquire information related to whether an editing function of the corresponding external electronic device on image data is supported (or whether an application supporting editing of image data is included) from the at least one external electronic device identified, and may determine a fourth external electronic device that supports the editing function of the image data among the at least one external electronic device identified as the external electronic device satisfying the designated condition. In addition, for example, the electronic device 200 may acquire information related to a specification (for example, a resolution) of the corresponding external electronic device from the at least one external electronic device identified, and may determine a fifth external electronic device that has a relatively higher specification among the at least one external electronic device identified as the external electronic device satisfying the designated condition.

In various embodiments, the above examples of determining whether the designated condition is satisfied may be collectively considered. For example, based on identifying that all of the at least one external electronic device identified are a plurality of external electronic devices having the same account (or token) as the electronic device 200, the electronic device 200 may determine the external electronic device that satisfies the designated condition in the prioritized order of the external electronic device that has established the communication connection of the designated communication protocol with the electronic device 200 most recently, the external electronic device that exists at the closest distance to the electronic device 200, and the external electronic device that supports the editing function of image data and/or the relatively higher specification.

In an embodiment, the electronic device 200 may attempt (or request) to connect communication of the designated communication protocol (for example, Wi-Fi direct) with the external electronic device that is determined as satisfying the designated condition, and may display a content indicating this attempt. Referring to FIG. 8 for example, the electronic device 200 may control the service 243 to request the communication connection of the designated communication protocol to the external electronic device that is determined as the target for the communication connection by using a communication module (for example, the communication module 210 of FIG. 3), and may display a first content 803 (for example, a text, an image and/or a symbol) indicating that the electronic device 200 is attempting to connect communication with the external electronic device on a third user interface 801 of the application 241. According to an embodiment, the third user interface 801 may include a preview image of an image that is shot based on at least one camera module (for example, the at least one camera module 220 of FIG. 3) operating according to execution of the application 241. In an embodiment, based on the communication connection of the designated communication protocol with the external electronic device not being established, the electronic device 200 may display an error message indicating that the communication connection with the external electronic device is not established in the same way as or similarly to operation 419 of FIG. 4 described above. The electronic device 200 may control the service 243 to re-attempt to connect communication with the external electronic device within a designated time or a designated number of times before or after displaying the error message. In an embodiment, when the communication connection of the designated communication protocol is established with the external electronic device that is determined as satisfying the designated condition, the electronic device 200 may display a content indicating the establishment of the communication connection. Referring to FIG. 9 for example, the electronic device 200 may control the service 243 to establish the communication connection (or communication channel) of the designated communication protocol with the external electronic device determined as the target for the communication connection by using the communication module 210 based on a response of the external electronic device to the request of the service 243, and may display a second content 901 (for example, a text, an image and/or a symbol) indicating that the communication connection with the external electronic device is completed on the third user interface 801 of the application 241. In various embodiments, the second content 901 indicating that the communication connection is completed may be switched from the first content (for example, the content 803 of FIG. 8) indicating that the above-described communication connection is being attempted, and may be displayed. In various embodiments, the electronic device 200 may further display a third content (not shown) (for example, a text, an image and/or a symbol) indicating identification information of the external electronic device with which the communication connection has been established on a certain area (for example, an area adjacent to the second content 901) of the third user interface 801.

In various embodiments, the electronic device 200 may omit the determination on whether the designated condition is satisfied, and may establish the communication connection (or communication channel) of the designated protocol with at least one external electronic device that has identification information corresponding to the identification information recorded in the memory 240 (for example, an external electronic device supporting an one-to-many communication connection of the designated protocol) among the detected at least one external electronic device by the service 243. In various embodiments, based on the absence of the at least one external electronic device being detected by the service 243, the electronic device 200 may control the service 243 to re-detect the at least one external electronic device within a designated time or a designated number of times. In various embodiments, after the communication connection of the designated protocol with the external electronic device is established, the electronic device 200 may disconnect the communication connection with the external electronic device with which the communication connection has been established, or may change the external electronic device for establishing the communication connection, based on a user input to a second user interface (for example, the second user interface 601 of FIG. 6) of the application 241.

In operations 705 and 707, the electronic device 200 according to an embodiment may shoot an image and may transmit (or share) data of the shot image. For example, the electronic device 200 may shoot the image through at least one camera module (for example, the at least one camera module 220 of FIG. 3), based on a user input (for example, a touch input to the third user interface of the application 241 (the third user interface 801 of FIG. 8 or 9), a voice input that utters a designated keyword (for example, "Click"), an input to a hardware button of the electronic device 200 supporting shooting by the camera, and/or a gesture input pre-defined in relation with shooting by the camera). In addition, for example, the electronic device 200 may control the service 243 to automatically transmit data of the shot image to the at least one external electronic device with which the communication connection (or communication channel) of the designated communication protocol (for example, Wi-Fi direct) is established by the electronic device 200 by using the communication module 210. In this respect, the external electronic device with which the communication connection of the designated communication protocol is established by the electronic device 200 upon performance of operation 703 may also be referred to as a target to which the electronic device 200 automatically transmits image data when acquiring the image data.

In an embodiment, the electronic device 200 may control the service 243 to transmit the image data in a designated format. For example, the electronic device 200 may control the service 243 to automatically transmit the image data having a DNG format and a JPEG format to the external electronic device which is communicatively connected according to the designated communication protocol. In this regard, the image data of the DNG format may be generated by combining images of multiple frames into one piece of raw data (for example, Computation RAW), and a relatively large amount of image information (for example, illumination information, brightness information, and/or shooting setting value information) may be included in the image data of the JPEG format to provide convenience for at least one of quality maintenance, compression, post-processing, editing, and compatibility of the original image. In an embodiment, the electronic device 200 may control the service 243 to include designated information in metadata of the image data and to transmit the image data. For example, the electronic device 200 may control the service 243 to include, in the metadata of the image data, information indicating that the corresponding image data is data that is transmitted (or shared) by the automatic sharing function of the electronic device 200.

In an embodiment, the electronic device 200 may continuously transmit (or share) a plurality of pieces of image data acquired based on execution of the application 241 while maintaining the communication connection (or communication channel) of the designated communication protocol with the at least one external electronic device while the application 241 is running. For example, based on acquisition of first image data through the at least one camera module 220, the electronic device 200 may control the service 243 to transmit the first image data to the communicatively connected external electronic device within a designated time from the acquisition of the first image data. Based on acquisition of second image data through the at least one camera module 220 after acquisition of the first image data while the application 241 is running, the electronic device 200 may control the service 243 to transmit the second image data to the communicatively connected external electronic device within a designated time from the acquisition of the second image data.

In operation 709, the electronic device 200 according to an embodiment may determine whether transmission (or sharing) of the at least one piece of image data acquired while the application is being executed is completed. For example, the electronic device 200 may receive information on a transmission state of the at least one piece of image data from the service 243, and may determine whether the at least one piece of image data is stably transmitted (or shared), based on the information.

According to an embodiment, based on determining that the transmission of the at least one piece of image data is completed, the electronic device 200 according to an embodiment may control a display module (for example, the display module 230 of FIG. 3) to display a message indicating that the transmission of the image data is completed in operation 711. Referring to FIG. 10 for example, the electronic device 200 may display, on a first user interface 1001 of the electronic device 200 (or a pop-up window displayed on the home screen of the electronic device 200) related to a notification center function of the electronic device 200, a list 1003 including identification information 1005 related to the at least one piece of image data which has been automatically transmitted (or shared). Furthermore, referring to FIG. 11 for example, the electronic device 200 may display, on a second user interface 1101 (for example, an outbound transfer folder) of the electronic device 200 that provides information on at least one piece of data transmitted to the outside by using the communication function of the electronic device 200, a file 1103 (or folder) including the identification information on the at least one piece of image data which has been automatically transmitted (shared).

According to an embodiment, based on determining that the transmission of the at least one piece of image data is not completed, the electronic device 200 according to an embodiment may control the display module 230 to display a message indicating a transmission error of the image data in operation 713. For example, the electronic device 200 may display, through the first user interface of the electronic device 200 (for example, the first user interface 1001 of FIG. 10), a list including identification information of at least one piece of image data that has not automatically been transmitted (or shared). Furthermore, for example, the electronic device 200 may display, through the second user interface of the electronic device 200 (for example, the second user interface 1101 of FIG. 11), a file (or folder) including identification information of at least one piece of image data that has not automatically been transmitted (or shared).

According to various embodiments in relation with the above description, when the state of the at least one external electronic device with which the communication connection (or communication channel) of the designated communication protocol is established by the electronic device 200 is changed, the at least one piece of image data may not stably be transmitted (or shared) to the external electronic device. For example, when the state of the at least one external electronic device is changed from a screen on state to a screen off state, the service included in the corresponding external electronic device is changed from an enabled state to a disabled state, the state of the at least one external electronic device is changed from a state in which an one-to-one communication connection of the designated communication protocol with the electronic device 200 is established to a state in which a one-to-one communication connection of the designated communication protocol with another external electronic device is established, or the state of the at least one external electronic device is changed form a state in which the at least one external electronic device is within an area of a range within a designated distance from the electronic device 200 to a state in which the at least one external electronic device leaves the area of the range within the designated distance from the electronic device 200, the at least one piece of image data may not stably be transmitted (or shared) to the external electronic device the state of which is changed. In an embodiment, based on determining that the transmission of the at least one piece of image data is not completed, the electronic device 200 may monitor the state of the at least one external electronic device, and, when the state of the external electronic device is changed to a state that suits transmission (or sharing) of the image data, may control the service 243 to retransmit the image data.

According to an embodiment, based on the termination of execution of the application 241, the electronic device 200 may disconnect the communication connection (or communication channel) of the designated communication protocol with the at least one external electronic device.

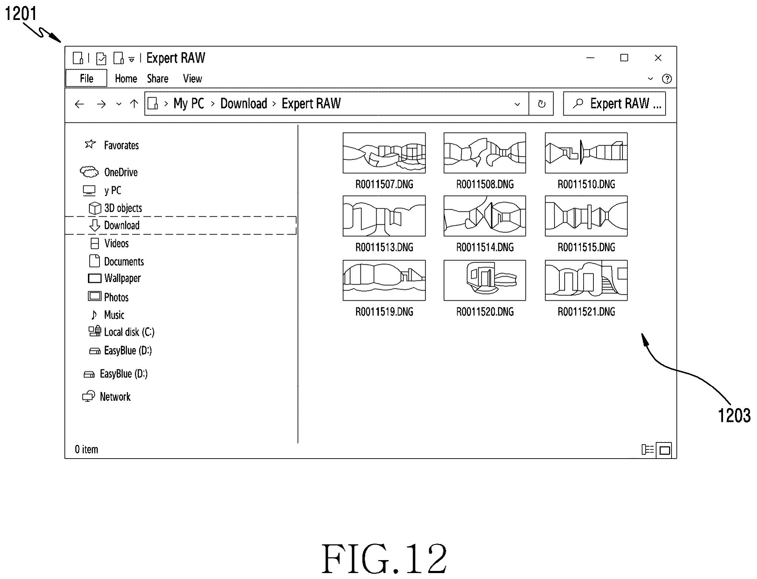

FIG. 12 is a view illustrating a user interface of an external electronic device which receives image data from an electronic device according to an embodiment.

Referring to FIG. 12, at least one external electronic device (for example, the at least one external electronic device 300 of FIG. 2) according to an embodiment may perform a series of processes based on reception (or sharing) of at least one piece of image data from an electronic device (for example, the electronic device 200 of FIG. 2 or 3). For example, the at least one external electronic device 300 may record (or store) the at least one piece of image data received in a designated folder 1201 (for example, the Expert RAW folder), and may automatically open the designated folder 1201 including thumbnail images 1203 on the at least one piece of image data, and may display the thumbnail images on a screen. In addition, for example, the at least one external electronic device 300 may automatically execute an application supporting an editing function on the at least one piece of image data, based on reception of the at least one piece of image data. For example, when editing of the at least one piece of image data is completed, the at least one external electronic device 300 may identify information included in meta data of the corresponding image data (for example, information indicating data transmitted (or shared) by the automatic sharing function of the electronic device 200), and may transmit the edited image data to the electronic device 200 through the communication connected with the electronic device 200, based on the information. In an embodiment, the electronic device 200 may receive the edited image data from the external electronic device through a service (for example, the service 243 of FIG. 3), and in response to this, may delete recording of original image data and may record the edited image data, or may record the edited image data independently from recording of the original image data.

In an embodiment, the series of processes of the external electronic device described above may be performed based on a request from the electronic device 200. For example, in the operation of transmitting (or sharing) the at least one piece of image data, the electronic device 200 may control the service 243 to transmit a signal for requesting the at least one external electronic device to perform the series of processes (for example, operations of opening a folder including at least one piece of image data, executing an application that supports an editing function on at least one piece of image data, and/or transmitting the at least one piece of image data that is edited to the electronic device 200).

According to embodiments of the disclosure, an electronic device 101, 200 may include: a communication module 190, 210; at least one camera module 180, 220; at least one processor 120, 250; and memory 130, 240 configured to store instructions.

According to various embodiments, when executed by the at least one processor, the instructions cause the electronic device to: enable a function for automatically transmitting at least one piece of image data that is acquired by using the at least one camera module 180, 220 while an application 146, 241 stored in the memory 130, 240 is running; detect at least one external electronic device 300, based on the enabling of the function; record identification information of the detected at least one external electronic device in the memory; execute the application; based on the execution of the application, determine, as a target to which the at least one piece of image data is to be automatically transmitted, an external electronic device that satisfies a designated condition among the at least one external electronic device the identification information of which is recorded; establish a communication connection of a designated communication protocol with the external electronic device that is determined as the target, by using the communication module 190, 210; and automatically transmit, the at least one piece of image data acquired by using the at least one camera module while the application is running, to the external electronic device that is determined as the target by using the communication module, while maintaining the communication connection.

According to various embodiments, when executed by the at least one processor, the instructions may cause the electronic device to establish a Wi-Fi direct communication connection with the external electronic device 300 determined as the target, as a part of the communication connection of the designated communication protocol.

According to various embodiments, the electronic device 101, 200 may further include a display module 160, 230.

According to various embodiments, when executed by the at least one processor, the instructions may cause the electronic device to: display a user interface 501, 601 that supports settings on a function of the application 146, 241 by using the display module 160, 230; and, based on a user input to the user interface, enable the function for automatically transmitting the at least one piece of image data.

According to various embodiments, when executed by the at least one processor, the instructions may cause the electronic device to: based on the enabling of the function, detect the at least one external electronic device 300 that has the same account as the electronic device 101, 200; and display a list 605 including identification information of the detected at least one external electronic device, by using the display module 160, 230.

According to various embodiments, when executed by the at least one processor, the instructions may cause the electronic device to: based on a user input to the list 605, select a first external electronic device among the at least one external electronic device 300; establish the communication connection of the designated communication protocol with the selected first external electronic device; and, based on the establishment of the communication connection of the designated communication protocol with the first external electronic device, display a content 611 indicating a communication connection state with the first external electronic device on a user interface 601 supporting setting on the function of the application 146, 241 by using the display module 160, 230.

According to various embodiments, when executed by the at least one processor, the instructions may cause the electronic device to determine, as the target to which the at least one piece of image data is to be automatically transmitted, the first external electronic device that has a history of establishing the communication connection of the designated communication protocol, based on the execution of the application 146, 241.

According to various embodiments, when executed by the at least one processor, the instructions may cause the electronic device to determine, as the target to which the at least one piece of image data is to be automatically transmitted, a second external electronic device that has the same account as the electronic device 101, 200 among the at least one external electronic device 300, based on the execution of the application 146, 241.

According to various embodiments, when executed by the at least one processor, the instructions may cause the electronic device to determine, as the target to which the at least one piece of image data is to be automatically transmitted, a third external electronic device that exists at a closest distance to the electronic device 101, 200 among the at least one external electronic device 300, based on the execution of the application 146, 241.

According to various embodiments, when executed by the at least one processor, the instructions may cause the electronic device to determine, as the target to which the at least one piece of image data is to be automatically transmitted, a fourth external electronic device that supports an editing function on the at least one piece of image data among the at least one external electronic device 300, based on the execution of the application 146, 241.

According to various embodiments, when executed by the at least one processor, the instructions may cause the electronic device to determine, as the target to which the at least one piece of image data is to be automatically transmitted, a fifth external electronic device that has a relatively high resolution among the at least one external electronic device 300, based on the execution of the application 146, 241.

According to various embodiments, when executed by the at least one processor, the instructions may cause the electronic device to: attempt the communication connection with the designated communication protocol with the external electronic device determined as the target by using the communication module 190, 210; based on the attempt at the communication connection of the designated communication protocol with the external electronic device determined as the target, display, by using the display module 160, 230, a first content 803 indicating the attempt at the communication connection on a user interface 801 including a preview image which is acquired by using the at least one camera module 180, 220; and, based on the establishment of the communication connection of the designated communication protocol with the external electronic device determined as the target, display, on the user interface by using the display module, a second content 901 indicating the establishment of the communication connection and a third content indicating identification information of the external electronic device determined as the target.

According to various embodiments, when executed by the at least one processor, the instructions may cause the electronic device to transmit the at least one piece of image data which is acquired by using the at least one camera module 180, 220 in a DNG format and a JPEG format by using the communication module 190, 210.

According to various embodiments, when executed by the at least one processor, the instructions may cause the electronic device to include, in meta data of the at least one piece of image data which is acquired by using the at least one camera module 180, 220, information indicating that the at least one piece of image data is transmitted by the function for automatically transmitting, and to transmit the at least one piece of image data by using the communication module 190, 210.

According to various embodiments, when executed by the at least one processor, the instructions may cause the electronic device to transmit, to the external electronic device that is determined as the target by using the communication module 190, 210, a signal that requests to perform at least one of automatic opening of a folder 1201 including the at least one piece of image data being transmitted, automatic execution of an application that supports an editing function on the at least one piece of image data being transmitted, and automatic transmission of at least one piece of image data that is edited for the at least one piece of image data being transmitted to the electronic device.

According to embodiments of the disclosure, an image data transmission method of an electronic device 101, 200 may include: enabling a function for automatically transmitting at least one piece of image data that is acquired by using at least one camera module 180, 220 while an application 146, 241 stored in memory 130, 240 is running; detecting at least one external electronic device 300, based on the enabling of the function; recording identification information of the detected at least one external electronic device in the memory; executing the application; based on the execution of the application, determining an external electronic device that satisfies a designated condition among the at least one external electronic device the identification information of which is recorded; establishing a communication connection of a designated communication protocol with the external electronic device that is determined as the target, by using a communication module 190, 210; and automatically transmitting, the at least one piece of image data acquired by using the at least one camera module while the application is running, to the external electronic device that is determined as the target by using the communication module, while maintaining the communication connection.

According to various embodiments, detecting the at least one external electronic device 300 may include: based on the enabling of the function, detecting the at least one external electronic device that has the same account as the electronic device 101, 200; and displaying a list 605 including identification information of the detected at least one external electronic device, by using the display module 160, 230.

According to various embodiments, the image data transmission method may further include: based on a user input to the list 605, selecting a first external electronic device among the at least one external electronic device 300; establishing the communication connection of the designated communication protocol with the selected first external electronic device; and, based on the establishment of the communication connection of the designated communication protocol with the first external electronic device, displaying a content 611 indicating a communication connection state with the first external electronic device on a user interface 601 supporting setting on the function of the application 146, 241 by using the display module 160, 230.

According to various embodiments, determining, as the target to which the at least one piece of image data is to be automatically transmitted, the external electronic device that satisfies the designated condition may include determining, as the target to which the at least one piece of image data is to be automatically transmitted, the first external electronic device that has a history of establishing the communication connection of the designated communication protocol, based on the execution of the application 146, 241.

According to various embodiments, automatically transmitting to the external electronic device determined as the target may include transmitting the at least one piece of image data which is acquired by using the at least one camera module 180, 220 in a DNG format and a JPEG format by using the communication module 190, 210.

According to various embodiments, automatically transmitting to the external electronic device determined as the target may include including, in meta data of the at least one piece of image data which is acquired by using the at least one camera module 180, 220, information indicating that the at least one piece of image data is transmitted by the function for automatically transmitting, and to transmit the at least one piece of image data by using the communication module 190, 210.

According to embodiments of the disclosure, in a computer readable non-transitory storage medium having a computer program recorded thereon to perform an image data transmission method of an electronic device 101, 200, the computer program may execute: enabling a function for automatically transmitting at least one piece of image data that is acquired by using at least one camera module 180, 220 while an application 146, 241 stored in memory 130, 240 is running; detecting at least one external electronic device 300, based on the enabling of the function; recording identification information of the detected at least one external electronic device in the memory; executing the application; based on the execution of the application, determining, as a target to which the at least one piece of image data is to be automatically transmitted, an external electronic device that satisfies a designated condition among the at least one external electronic device the identification information of which is recorded; establishing a communication connection of a designated communication protocol with the external electronic device that is determined as the target, by using a communication module 190, 210; and automatically transmitting, the at least one piece of image data acquired by using the at least one camera module while the application is running, to the external electronic device that is determined as the target by using the communication module, while maintaining the communication connection.

According to embodiments of the disclosure, there is provided a mechanism that automatically and continuously transmits (or shares) at least one piece of image data which is acquired based on execution of the application to at least one external electronic device without a separate user input or access to an internet-based network while executing the application.

In addition, according to various embodiments of the disclosure, at least one piece of image data acquired based on execution of the application is transmitted in a DNG format, so that convenience for at least one of quality maintenance, compression, post-processing, editing, and compatibility of the at least one piece of image data may be supported.

The effect achieved by the disclosure is not limited to those mentioned above, and other effects that are not mentioned above may be clearly understood to those skilled in the art based on various embodiments of the disclosure.

In the disclosure, the function or the operation that the electronic device performs may be performed by one or more processors executing one or more instructions stored in memory. The function or operation of the electronic device mentioned in the disclosure may be performed by one processor executing one or more instructions, or may be performed by a combination of a plurality of processors executing one or more instructions. It may be understood that the processor mentioned in the disclosure includes a circuit for performing computation or controlling other components of the electronic device. For example, the one or more processors may include a central processing unit (CPU), a micro-processor unit (MPU), an application processor (AP), a communication processor (CP), a neural processing unit (NPU), a system on chip (SoC), or an integrated circuit (IC) which is configured to execute one or more instructions. The one or more processors may be configured to perform the operation of the electronic device described above.

In the disclosure, the program (the software module or software) may be stored in random access memory, and/or non-volatile memory including flash memory, read only memory (ROM), electrically erasable programmable read only memory (EEPROM), a magnetic disc storage device, compact disc-ROM (CD-ROM), digital versatile discs (DVDs) or other forms of optical storage devices, and a magnetic cassette. Alternatively, the program may be stored in memory configured in combination of all or some of these storage media. The memory may be configured by one storage medium or a combination of a plurality of storage media. The at least one instruction may be stored in one storage medium or may be distributed and stored in the plurality of storage media.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a communication module;
at least one camera module;
at least one processor; and
memory configured to store instructions,
wherein, when executed by the at least one processor, the instructions cause the electronic device to:
enable a function for automatically transmitting at least one piece of image data that is acquired by using the at least one camera module while an application stored in the memory is running;
detect at least one external electronic device, based on the enabling of the function;
record identification information of the detected at least one external electronic device in the memory;
execute the application;
based on the execution of the application, determine, as a target to which the at least one piece of image data is to be automatically transmitted, an external electronic device that satisfies a designated condition among the at least one external electronic device the identification information of which is recorded, ;
establish a communication connection of a designated communication protocol with the external electronic device that is determined as the target, by using the communication module; and
automatically transmit, the at least one piece of image data acquired by using the at least one camera module while the application is running, to the external electronic device that is determined as the target by using the communication module, while maintaining the communication connection.

2. The electronic device of claim 1, wherein, when executed by the at least one processor, the instructions cause the electronic device to establish a Wi-Fi direct communication connection with the external electronic device determined as the target, as a part of the communication connection of the designated communication protocol.

3. The electronic device of claim 1, further comprising a display module,wherein, when executed by the at least one processor, the instructions cause the electronic device to:
display a user interface that supports settings on a function of the application by using the display module; and
based on a user input to the user interface, enable the function for automatically transmitting the at least one piece of image data.

4. The electronic device of claim 1, further comprising a display module,wherein, when executed by the at least one processor, the instructions cause the electronic device to:
based on the enabling of the function, detect the at least one external electronic device that has the same account as the electronic device; and
display a list comprising identification information of the detected at least one external electronic device, by using the display module.

5. The electronic device of claim 4, wherein, when executed by the at least one processor, the instructions cause the electronic device to:
based on a user input to the list, select a first external electronic device among the at least one external electronic device;
establish the communication connection of the designated communication protocol with the selected first external electronic device; and
based on the establishment of the communication connection of the designated communication protocol with the first external electronic device, display a content indicating a communication connection state with the first external electronic device on a user interface supporting setting on the function of the application by using the display module.

6. The electronic device of claim 5, wherein, when executed by the at least one processor, the instructions cause the electronic device to determine, as the target to which the at least one piece of image data is to be automatically transmitted, the first external electronic device that has a history of establishing the communication connection of the designated communication protocol, based on the execution of the application.

7. The electronic device of claim 1, wherein, when executed by the at least one processor, the instructions cause the electronic device to determine, as the target to which the at least one piece of image data is to be automatically transmitted, a second external electronic device that has the same account as the electronic device among the at least one external electronic device, based on the execution of the application.

8. The electronic device of claim 1, wherein, when executed by the at least one processor, the instructions cause the electronic device to determine, as the target to which the at least one piece of image data is to be automatically transmitted, a third external electronic device that exists at a closest distance to the electronic device among the at least one external electronic device, based on the execution of the application.

9. The electronic device of claim 1, wherein, when executed by the at least one processor, the instructions cause the electronic device to determine, as the target to which the at least one piece of image data is to be automatically transmitted, a fourth external electronic device that supports an editing function on the at least one piece of image data among the at least one external electronic device, based on the execution of the application.

10. The electronic device of claim 1, wherein, when executed by the at least one processor, the instructions cause the electronic device to determine, as the target to which the at least one piece of image data is to be automatically transmitted, a fifth external electronic device that has a relatively high resolution among the at least one external electronic device, based on the execution of the application.

11. The electronic device of claim 1, further comprising a display module, wherein, when executed by the at least one processor, the instructions cause the electronic device to:
attempt the communication connection with the designated communication protocol with the external electronic device determined as the target by using the communication module;
based on the attempt at the communication connection of the designated communication protocol with the external electronic device determined as the target, display, by using the display module, a first content indicating the attempt at the communication connection on a user interface comprising a preview image which is acquired by using the at least one camera module; and
based on the establishment of the communication connection of the designated communication protocol with the external electronic device determined as the target, display, on the user interface by using the display module, a second content indicating the establishment of the communication connection and a third content indicating identification information of the external electronic device determined as the target.

12. The electronic device of claim 1, wherein, when executed by the at least one processor, the instructions cause the electronic device to transmit the at least one piece of image data which is acquired by using the at least one camera module in a DNG format and a JPEG format by using the communication module.

13. The electronic device of claim 1, wherein, when executed by the at least one processor, the instructions cause the electronic device to include, in meta data of the at least one piece of image data which is acquired by using the at least one camera module, information indicating that the at least one piece of image data is transmitted by the function for automatically transmitting, and to transmit the at least one piece of image data by using the communication module.

14. The electronic device of claim 1, wherein, when executed by the at least one processor, the instructions cause the electronic device to transmit, to the external electronic device that is determined as the target by using the communication module, a signal that requests to perform at least one of automatic opening of a folder comprising the at least one piece of image data being transmitted, automatic execution of an application that supports an editing function on the at least one piece of image data being transmitted, and automatic transmission of at least one piece of image data that is edited for the at least one piece of image data being transmitted to the electronic device.

15. An image data transmission method comprising:
enabling a function for automatically transmitting at least one piece of image data that is acquired by using at least one camera module while an application stored in a memory is running;
detecting at least one external electronic device, based on the enabling of the function;
recording identification information of the detected at least one external electronic device in the memory;
executing the application;
based on the execution of the application, determining, as a target to which the at least one piece of image data is to be automatically transmitted, an external electronic device that satisfies a designated condition among the at least one external electronic device the identification information of which is recorded;
establishing a communication connection of a designated communication protocol with the external electronic device that is determined as the target, by using a communication module; and
automatically transmitting, the at least one piece of image data acquired by using the at least one camera module while the application is running, to the external electronic device that is determined as the target by using the communication module, while maintaining the communication connection.
